(19) Europäisches Patentamt
European Patent Office
Office européen des brevets

(11) Veröffentlichungsnummer: **0 195 218 B1**

(12) **EUROPÄISCHE PATENTSCHRIFT**

(45) Veröffentlichungstag der Patentschrift: **22.01.92**

(51) Int. Cl.[5]: **C09J 201/02**, C08L 23/08, C08L 77/00

(21) Anmeldenummer: **86101484.3**

(22) Anmeldetag: **05.02.86**

Die Akte enthält technische Angaben, die nach dem Eingang der Anmeldung eingereicht wurden und die nicht in dieser Patentschrift enthalten sind.

# (54) Schmelzkleber.

(30) Priorität: **13.02.85 DE 3504804**

(43) Veröffentlichungstag der Anmeldung:
**24.09.86 Patentblatt 86/39**

(45) Bekanntmachung des Hinweises auf die Patenterteilung:
**22.01.92 Patentblatt 92/04**

(84) Benannte Vertragsstaaten:
**AT BE CH DE FR GB IT LI LU NL SE**

(56) Entgegenhaltungen:
**EP-A- 0 061 119**
**FR-A- 2 179 059**
**FR-A- 2 365 618**
**US-A- 4 018 733**

(73) Patentinhaber: **Henkel Kommanditgesellschaft auf Aktien**
**Postfach 1100 Henkelstrasse 67**
**W-4000 Düsseldorf-Holthausen(DE)**

(72) Erfinder: **Wichelhaus, Jürgen, Dr.**
**Egenstrasse 60**
**W-5600 Wuppertal 1(DE)**
Erfinder: **Gruber, Werner, Dr.**
**Franz-Karl-Kremer Strasse 7**
**W-4052 Korschenbroich(DE)**
Erfinder: **Andreas, Johannes**
**Bonner Strasse 14**
**W-4000 Düsseldorf 13(DE)**

**EP 0 195 218 B1**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft einen Schmelzkleber auf Basis einer verträglichen Polymermischung aus einem Polyamid und einem Copolymerisat. Als Polyamid werden Polyamide mit einem Gehalt an dimeren Fettsäuren als Copolymerisate solche des Ethylens mit einem Gehalt an Carbonsäureanhydrid eingesetzt.

Schmelzklebstoffe erfreuen sich auf vielen Gebieten der Technik einer steigenden Beliebtheit. Sie bieten dem Bearbeiter den Vorteil, daß sie durch einfaches Abkühlen der Schmelze die erforderliche Bindungsfestigkeit erreichen, und daher schnellaufende Produktionsvorgänge ermöglichen. Ein weiterer Vorteil ist darin zu sehen, daß keine Lösungsmittel verwendet werden, so daß weder Energieaufwendungen für Trocknung noch die Rückgewinnung von Lösungsmitteln oder Maßnahmen zur Verhinderung einer Belastung der Arbeitsluft nötig sind.

Eine wichtige Klasse von Schmelzklebern sind Polyamide. Unter diesen sind Produkte auf Basis dimerer Fettsäuren von großer Wichtigkeit, da derartige Polyamide einerseits über einen relativ engen Erweichungsbereich verfügen und zum anderen auch bei Temperaturen unter 0 °C nicht zur Kristallisation und daher nicht zum Verspröden neigen.

Wenngleich derartige Produkte bei zahlreichen Anwendungen hervorragende Eigenschaften zeigen, so besteht doch ein Bestreben, spezielle Schmelzkleber mit noch besseren Hafteigenschaften zu entwickeln. Es ist daher versucht worden, die Polyamide nicht nur durch entsprechende Auswahl der einzelnen einkondensierten Bausteine zu verändern und den einzelnen Anwendungen anzupassen, sondern auch verträgliche Polymermischungen mit speziellen Eigenschaften zu schaffen. Unter verträglichen Polymermischungen werden hier Mischungen angesehen, die im festen Zustand und bis zu der über dem Schmelzpunkt liegenden Verarbeitungstemperatur für das Auge homogen und einphasig erscheinen. Physikalisch handelt es sich dabei entweder um echte Lösungen oder aber auch um feinteilige Dispersionen des einen Polymeren in der Matrix des anderen.

So beschreibt etwa das US-Patent 4 018 733 verträgliche Mischungen eines sauren Copolymeren auf Basis Ethylen mit einer Säurezahl von 3 bis 80 und eines Polyamids mit einer Aminzahl von 70 bis 400 sowie weiterer Komponenten im Bereich 80 : 20 bis 20 : 80. Die genannten Polymermischungen bieten für zahlreiche Verklebungsprobleme ausreichende technische Eigenschaften. Sie eignen sich jedoch nicht oder nur wenig für Verbunde aus extrem schwierig zu verklebenden Materialien, zum Beispiel Kupfer oder unvorbehandeltes Polyethylen.

Die Erfinder haben sich daher die Aufgabe gestellt, einen Schmelzklebstoff auf Basis eines Polyamids aus Dimerfettsäuren und eines Copolymeren des Ethylens zu schaffen, mit dem sich sowohl unvorbehandeltes Polyethylen als auch Kupfer dauerhaft verkleben läßt. Dabei soll der neue Schmelzklebstoff den üblichen Anforderungen wie etwa Tieftemperaturflexibilität sowie den Anforderungen an das Schmelzverhalten und an die Europ. Patentanmeldung 86101484.3 Stabilität des geschmolzenen Materials entsprechen.

Gegenstand der Erfindung sind daher Schmelzklebstoffe aus

- Polyamiden auf Basis von dimerisierten Fettsäuren, aliphatischen Aminen und modifizierenden Zusätzen einerseits sowie
- Copolymeren des Ethylens andererseits

in verträglicher Mischung, dadurch gekennzeichnet, daß sie

- 5 bis 95 Gew.-%, bezogen auf Gesamtmischung, eines Copolymeren aus
  Ethylen,
  dem inneren Anhydrid einer ethylenisch ungesättigten Dicarbonsäure und
- gegebenenfalls (Meth-)acrylsäureestern und/oder Vinylestern oder bis zu 15% Propylen, bezogen auf Ethylen

sowie gewünschtenfalls

bis zu 30 Gew.-% weiterer Hilfsstoffe enthalten.

Wenngleich die vorteilhafte Eignung der erfindungsgemäßen Schmelzkleber nicht erklärt werden kann, so wird aufgrund der Überlegenheit der anhydridgruppenhaltigen Copolymeren gegenüber den säuregruppenhaltigen Copolymeren das Folgende vermutet: Bei der Schmelztemperatur der Systeme könnten Anhydridgruppen des Copolymeren mit Gruppen des Polyamids, die aciden Wasserstoff tragen, unter Ringöffnung des Anhydrids reagieren. Durch eine derartige Reaktion entstünden Moleküle, die sowohl einen Polyamidblock als auch einen Copolymerblock enthalten. Derartige Moleküle würden dann als quasi Emulgator eine Herabsetzung der Grenzflächenspannung der unterschiedlichen Anteile der Polymerschmelze bewirken und so eine Entmischung verhindern. Elektronenmikroskopisch wurde festgestellt, daß die erfindungsgemäßen Schmelzklebstoffe zumindest teilweise nicht homogen vorliegen, sondern daß eine Phase in der anderen feinteilig dispergiert ist. Dabei wird vermutet, daß die dispergierte Phase das Copolymerisat ist.

Die erfindungsgemäß eingesetzten Copolymeren bestehen in der Hauptsache aus Ethylen, wobei ein Teil des Ethylens auch durch Propylen ersetzt sein kann. So können, bezogen auf Ethylen, bis zu 15 % Propylen vorliegen. Geeignete Copolymere weisen eine Zusammensetzung im folgenden Bereich auf:
50 bis 90 Gew.-% Ethylen,
5 bis 30 Gew.-% (Meth-)acrylsäureester von primären, aliphatischen linearen oder verzweigten Alkoholen mit 1 bis 18 C-Atomen sowie
2 bis 30 Gew.-% des inneren Anhydrids einer polymerisierbaren Carbonsäure.

Hier sind cyclische Anhydride etwa Maleinsäureanhydrid, Itaconsäureanhydrid und dergleichen bevorzugt. Von besonderer Bedeutung ist dabei Maleinsäureanhydrid. An Ester der (Meth-)acrylsäure sind von besonderer Bedeutung der Methyl, Ethyl, Propyl, Butyl, 2-Ethylhexylester und Ester mit sogenannten Fettalkoholen mit 12 bis 18 C-Atomen, die auch ungesättigt sein können. Darüber hinaus kann ein Teil der (Meth-)acrylsäureester auch durch Ester des Vinylalkohols, zum Beispiel durch Vinylacetat oder durch Vinylester von $C_3$-bis $C_{18}$-Carbonsäuren ersetzt werden.

Nach einer besonders bevorzugten Ausführungsform der Erfindung werden Copolymere eingesetzt, die 80 bis 90 Gew.-% Ethylen, 5 bis 15 Gew.-% der zuvor benannten Ester der (Meth-)acrylsäure und 2 bis 5 Gew.-% des ungesättigten Anhydrids, vorzugsweise Maleinsäureanhydrid aufweisen.

Die Copolymeren weisen vorzugsweise ein Molekulargewicht (Gewichtsmittel) von etwa 50 000 bis 250 000 aus. Im allgemeinen verwendet man zur Herstellung der erfindungsgemäß einzusetzenden Polymerisate bei längerkettigem Alkoholrest des Acrylesters und des Methacrylesters geringere Anteile. Auch bei Methacrylestern wird bevorzugt die Alkoholkomponente von einem längerkettigen Alkohol gebildet wie etwa einem $C_8$- bis $C_{18}$-Monoalkohol.

Wenngleich im beanspruchten Bereich sich mit großer Sicherheit verträgliche Mischungen aus den Polyamiden und den Copolymerisaten bilden lassen, so hat der Fachmann doch in Grenzfällen die Verträglichkeit durch einfache Vorversuche festzustellen. Dazu werden Schmelzen der Bestandteile in dem beabsichtigten Mischungsverhältnis hergestellt, und es wird nach dem Rühren beobachtet, ob Entmischung stattfindet. Hernach wird abgekühlt und beobachtet, ob hierbei eine Trübung auftritt. Treten Entmischungsvorgänge auf, so wird der Fachmann die Menge an Copolymerisat verringern oder die weiter unten beschriebenen Verträglichkeitsverbesserer zusetzen.

Die in den erfindungsgemäßen Polymermischungen (Blends) eingesetzten Ethylencopolymerisate sind an sich bekannt. Sie können in üblicher Weise durch radikalische Polymerisation hergestellt und in weiten Bereichen des Molekulargewichts variiert werden. Es gilt hier das allgemeine Fachwissen der Polymerchemie.

Die erfindungsgemäßen Schmelzkleber enthalten als weitere Mischungskomponente thermoplastische Polyamide auf Basis Dimerfettsäure. Derartige Polyamide sind bekannt und werden seit längerem als Schmelzkleber eingesetzt. Für die Herstellung der erfindungsgemäßen Blends sind beispielsweise Polyamide folgender Zusammensetzung geeignet:

a) 35 bis 49,5 Mol-% dimere Fettsäure sowie
b) 0,5 bis 15 Mol-% monomere Fettsäure einer Kettenlänge von 12 bis 22 Kohlenstoffatomen und
c) 2 bis 35 Mol-% Polyetherdiamine der allgemeinen Formel

$$H_2N - R_1 - O - (RO)_x - R_2 - NH_2,$$

in der x eine Zahl zwischen 8 und 80, vornehmlich zwischen 8 und 40, $R_1$ und $R_2$ gleiche oder verschiedene aliphatische und/oder cycloaliphatische Kohlenwasserstoffreste und R einen gegebenenfalls verzweigten aliphatischen Kohlenwasserstoffrest mit 1 bis 6 Kohlenstoffatomen darstellt sowie
d) 15 bis 48 Mol-% aliphatische Diamine mit 2 bis 40 Kohlenstoffatomen im C-Gerüst.

Unter ihnen sind bevorzugt Polyamide aus

a) 20 bis 49,5 Mol-% dimeren Fettsäuren, die bis zu 6, vorzugsweise bis zu 4, insbesondere nicht mehr als 2 Mol-% trimere Anteile enthalten sowie
b) 0,5 bis 15 Mol-% monomeren Fettsäuren einer Kettenlänge von 12 bis 22 Kohlenstoffatomen und bis zu
c) 20 bis 55 Mol-% eines wenigstens 2 primäre Aminogruppen tragenden Amins mit 2 bis 40 Kohlenstoffatomen im C-Gerüst.

Nach einer besonders bevorzugten Ausführungsform ist das einzusetzende Polyamid hergestellt aus

a) 35 bis 49,5 Mol-% dimeren Fettsäuren (trimerhaltig wie oben angegeben),
b) 0,5 bis 15 Mol-% monomeren Fettsäuren,
c) 4 bis 10 Mol-% Polyetherdiaminen und
d) 40 bis 46 Mol-% aliphatischen Diaminen.

Die erfindungsgemäß eingesetzten Polyamide können darüber hinaus noch weitere in Schmelzklebern gängige Rohstoffe enthalten. So sind insbesondere aliphatische Dicarbonsäuren gebräuchlich. Geeignete aliphatische Carbonsäuren weisen vorzugsweise 4 bis 12 C-Atome auf. So sind beispielsweise Glutarsäure, Maleinsäure, Bernsteinsäure, Adipinsäure, Pimelinsäure, Korksäure oder auch Sebacinsäure geeignet. Durch diese Säuren kann Dimerfettsäure molmäßig bis zu 2/3 ersetzt werden. Dabei ist es dem Fachmann bekannt, daß durch Zusatz von Sebacinsäure der Schmelzpunkt der Polyamide in gewissen Grenzen erhöht werden kann. Weitere im Schmelzkleber mögliche Rohstoffe sind langkettige Aminocarbonsäuren wie 11-Amino-undecansäure oder auch Lauryllactam. In kleinen Mengen können auch die in der Faserchemie bekannten Polyamid-Rohstoffe wie beispielsweise Caprolactam eingesetzt werden. Diese Stoffe erlauben es dem Fachmann, den Schmelzpunkt in gewissen Grenzen zu erhöhen.

Bezüglich der Aminkomponenten in den Polyamiden ist auszuführen, daß hier Polyetherpolyole mit primären Aminoendgruppen bevorzugt sind. Geeignete Polyetherpolyole mit Aminoendgruppen basieren auf Polyethylenglykol, Polypropylenglykol oder Polytetrahydrofuran. Dabei sind Polyetherpolyole mit Aminoendgruppen bevorzugt, die nicht oder nur geringfügig wasserlöslich sind. Die eingesetzten Polyetherpolyole mit Aminoendgruppen weisen Molekulargewichte zwischen 700 und 3 500 oder auch zwischen 1 200 und 2 500 auf. Eine besonders geeignete Rohstoffklasse sind beispielsweise die Bis-(3-aminopropyl)-polytetrahydrofurane eines Molekulargewichts zwischen 700 und 3 500 oder die Bis-(2-aminopropyl)-polyoxypropylene eines Molekulargewichts zwischen 1 200 und 2 500. Weiterhin können auch primäre lineare Alkylendiamine mit 2 bis 10 C-Atomen eingesetzt werden etwa Hexamethylendiamin, 1,3-Diaminopropan, 1,4-Diaminobutan. Geeignet ist auch Piperazin.

Eine weitere geeignete Klasse von Diaminen leitet sich von den Dimerfettsäuren ab und enthält statt der Carboxylgruppen primäre Aminogruppen. Derartige Substanzen werden häufig Dimerdiamine genannt. Sie werden durch Nitrilbildung aus den dimerisierten Fettsäuren und anschließende Hydrierung erhalten.

Bezüglich des molekularen Aufbaus der den erfindungsgemäßen verträglichen Mischungen zugrunde liegenden Polyamide ist das Folgende auszuführen: Dem auf diesem Gebiete tätigen Fachmann ist es bekannt, daß monofunktionelle, difunktionelle und trifunktionelle Rohstoffe in einem bestimmten Verhältnis eingesetzt werden, um schmelzbare d.h. nicht vernetzte Produkte zu erhalten. Es gilt hier das allgemeinen Fachwissen der Polymerchemie. Danach kann beim Auftreten von Vernetzungen / Vergelungen durch Absenken des Anteils an trifunktionellen Komponenten (Trimerfettsäuren) und/oder Erhöhen des Gehalts an monofunktionellen Aminen oder Fettsäuren zu Rezepturen gelangt werden, die nicht zur Vergelung neigen. Das Molekulargewicht der erfindungsgemäßen Schmelzkleber läßt sich am besten durch Endgruppen-Titration der Amino- oder Säureendgruppen über das Molekulargewicht der Einzelkomponenten errechnen. Erfindungsgemäß bevorzugte Schmelzkleber weisen nur eine Art von funktionellen Endgruppen auf, d.h. sie stellen Amine oder Carbonsäuren dar So weisen beispielsweise Polyamide mit einer Restsäurezahl günstige Eigenschaften auf. Die Restsäurezahl liegt dabei im Bereich 1 bis 50, vorzugsweise 2 bis 30 und insbesondere 4 bis 12. Für viele Verwendungszwecke sind jedoch Polyamide mit Aminoendgruppen bevorzugt. Diese weisen Aminzahlen zwischen 2 und 15, vorzugsweise zwischen 4 und 10 auf.

Beim Einsatz derartiger Polyamide kann es in den erfindungsgemäßen Mischungen vereinzelt zu Unverträglichkeiten kommen. Dies wird der Fachmann dadurch vermeiden, daß er, bezogen auf die Endgruppen wie etwa molaren Mengen Carbonsäureanhydride oder Fettsäureester zusetzt.

Die zur Herstellung der erfindungsgemäßen Polymermischungen (Blends) verwendeten Ausgangsmaterialien sind erstaunlicherweise in weiten Grenzen miteinander verträglich. So kann die Gewichtsmenge an Polyamid oder an Copolymerisat auf Basis Ethylencopolymerisat in den Grenzen zwischen 5 und 95 % variiert werden. Aufgrund der Klebeeigenschaften ist es jedoch bevorzugt, daß Copolymerisate auf Basis Ethylen in Mengen von nur 5 bis 60 Gew.-% einzusetzen. Besonders günstige Ergebnisse werden erhalten, wenn nur 10 bis 30 Gew.-% des Ethylencopolymerisats vorhanden sind.

Wie bereits angesprochen können die erfindungsgemäßen verträglichen Mischungen noch weitere Komponenten enthalten. Hier sind in erster Linie Verträglichkeitsverbesserer zu nennen. Als Verträglichkeitsverbesserer geeignet sind Dicarbonsäuren oder deren Anhydride mit 3 bis 10 C-Atomen etwa die Dicarbonsäuren, die in den Polyamiden vorhanden sein können einschließlich Dimer- und Trimerfettsäure. Weitere geeignete Verträglichkeitsverbesserer sind die Ester von Fettsäuren, insbesondere deren Ester mit primären Alkoholen wie Methanol, Ethanol und dergleichen. Es kann weiterhin günstig sein, auch Weichmacher mitzuverwenden. Geeignete Weichmacher sind Weichmacher auf Basis von Phthalsäureestern, Epoxidweichmacher, Polyesterweichmacher oder die als Weichmacher gängigen Phosphorsäuretriester. Weiterhin können organische Lösungsmittel als Verträglichkeitsverbesserer eingesetzt werden. Nach einer weiteren Ausführungsform der Erfindung können auch Klebrigmacher wie verschiedene, dem Fachmann unter diesem Oberbegriff bekannte Harze eingesetzt werden. Die genannten Hilfsstoffe werden im allgemeinen in Mengen von nicht mehr als 30 Gew.-%, bezogen auf die verträglichen Mischungen insgesamt, eingesetzt.

Häufig sind jedoch 2 bis 8 Gew.-% und insbesondere 3 bis 5 Gew.-% ausreichend.

Neben den vorgenannten Bestandteilen können die erfindungsgemäßen verträglichen Mischungen darüber hinaus noch weitere in Klebstoffen gängige Hilfsstoffe enthalten. So können etwa Antioxidantien, Stabilisatoren gegen Licht- oder Wärmeabbau, Füllstoffe, organischer oder anorganischer Natur, Farbpigmente, Konservierungsmittel oder Fungicide in untergeordneten Mengen beigefügt sein. Viele dieser Zusätze werden üblicherweise in Mengen von 0,05 bis 2 Gew.-% beigefügt.

Zur Herstellung der erfindungsgemäßen verträglichen Polymermischungen können 2 Wege beschritten werden. Zum einen ist es möglich die Ausgangskomponenten vorzugsweise nach mechanischer Vorverkleinerung in den gewünschten Mischungsverhältnissen gemeinsam über den Schmelzpunkt zu erwärmen und durch einfaches Rühren zu vermischen. Ein weiterer Herstellungsweg geht von Lösungen der Ausgangskomponenten etwa in aromatischen Lösungsmitteln wie Toluol oder auch in DMF oder ähnlichen Lösungsmitteln aus. Die Lösungen werden vermengt und die Schmelzkleber daraus durch Abdunsten des Lösungsmittels erhalten.

Nach einer weiteren Ausführungsform der Erfindung können die erfindungsgemäßen Polymermischungen auch mit üblichen anderen Schmelzkleber-Rohstoffen konfektioniert werden. So können beispielsweise bis zu 30 Gew.-% wachsartiges Polyethylen beigemengt werden.

Die Applikation der erfindungsgemäßen Schmelzklebstoffe erfolgt im allgemeinen aus der Schmelze über Förder- oder Dosiereinrichtungen. Die Schmelze kann auf Vorrat gehalten werden oder durch Abschmelzen von Formkörpern wie Zylindern, Fäden, Drähten oder sonstigen Profilen gewonnen werden. Unmittelbar nach dem Auftragen des flüssigen Klebstoffilms sollten die Klebeflächen unter leichtem Druck miteinander verbunden werden, bis die eigentliche Klebung eingetreten ist.

Darüber hinaus ist es selbstverständlich möglich, in geeigneten Lösungsmitteln die neuen Blends zu lösen und so auf den zu verklebenden Flächen zu applizieren. In der Regel ist es dann notwendig, durch Wärmeeinwirkung den klebfähigen Zustand herbeizuführen. Dies gilt insbesondere für den Fall, daß eine der beiden zu verklebenden Flächen nicht durchlässig für das verwendete Lösungsmittel ist. Schließlich ist es auch möglich, in geeigneter wäßriger Dispersion den Klebstoff aufzutragen und nach Abdunsten des Wassers die eigentliche Verklebung unter Wärmeeinwirkung durchzuführen.

Die erfindungsgemäßen Klebstoffe eignen sich zum Verkleben einer Vielzahl von Substraten. So können beispielsweise Metalle verklebt werden wie Eisen, Aluminium oder Nickel, Metallegierungen wie Messing und insbesondere das ansonsten schwer zu verklebende Kupfer. Weiterhin können polare wie unpolare Kunststoffe verklebt werden etwa Polyvinylchlorid, Polyester, Polycarbonate, Polymerisate. Besonders geeignet sind die erfindungsgemäßen Schmelzkleber zur Verklebung unpolarer Polymerer. Dabei ist es eine herausragende Eigenschaft der erfindungsgemäßen Systeme, daß Polyethylen oder Polypropylen ohne die sonst übliche Vorbehandlung mit hohen Festigkeiten verklebt werden können.

So werden auf diesen Materialien die nach dem Stand der Technik zu erhaltenen Klebefestigkeiten (z.B. US 4 018 733) übertroffen. Es ist weiterhin hervorzuheben, daß die Einzelkomponenten der Polymermischungen sich zu Verklebungen dieser Art in keiner Weise eignen. Von besonderer Wichtigkeit sind die guten Tieftemperatureigenschaften der erfindungsgemäßen Polymermischungen. So wurde auch bei Temperaturen von - 20 °C oder darunter selbst bei langer Lagerzeit keine Versprödung beobachtet.

## Beispiele

Ausgangsmaterialien: Zur Herstellung der thermoplastischen Polyamide auf Basis von dimerisierten Fettsäuren aus natürlichen Fettsäuren mit 10 bis 18 Kohlenstoffatomen wurden diese in bekannter Weise mit verschiedenen Aminkomponenten kondensiert.

In der nachfolgenden Tabelle 1 sind die Mengen der eingesetzten Fettsäuren und der Amine in Gewichtsteilen (g) sowie die resultierenden Amin- und Säurezahlen wiedergegeben.

Tabelle 1

| Polyamid | A | B | C |
|---|---|---|---|
| polym. Fettsäure (mono 1 %; dim. 95 %; trim. 4 %) FSI | 265,0 | 285,0 | 108,3 |
| Stearinsäure | 19,9 | - | 56,4 |
| Diaminoethan | 27,7 | 27,6 | 18,0 |
| Bis-(3-aminopropyl)-poly-tetrahydrofuran (MG 1 100) | 41,2 | - | - |
| Piperazin | - | - | 32,2 |
| Bis-(2-aminopropyl)-poly-propylenoxid (MG 2 000) | - | 120,0 | |
| Aminzahl<br>Säurezahl | 1,0<br>7,6 | 2,9<br>1,4 | 0,5<br>9,1 |

Die eingesetzten Terpolymere aus Ethylen, Acrylsäureethylester und Maleinsäureanhydrid haben folgende Zusammensetzungen und Eigenschaften:

Terpolymer D

| | | |
|---|---|---|
| Ethylengehalt | : | 91 Gew.-% |
| Acrylsäureethylester | : | 6 " " |
| Maleinsäureanhydrid | : | 3 " " |
| Molgewicht ($M_w$) | : | 45 000 - 50 000 |
| Viskosität | : | 87 000 mPa·s/190 °C |
| Erweichungsbereich | : | 80 - 100 °C |

Terpolymer E

| | | |
|---|---|---|
| Ethylengehalt | : | 91,5 Gew.-% |
| Acrylsäureethylester | : | 5,5 Gew.-% |
| Maleinsäureanhydrid | : | 3,0 Gew.-% |
| Molgewicht ($M_w$) | : | 80 000 - 85 000 |
| Viskosität | : | 178 000 mPa·s/190 °C |
| Erweichungsbereich | : | 85 - 105 °C |

Die Polyamid-Blends wurden durch Zusammenschmelzen der jeweiligen Polyamide A, B und C mit den

Terpolymeren D bzw. E bei 210 °C unter Inertgas hergestellt.

In der nachfolgenden Tabelle 2 sind in Abhängigkeit von der laufenden Nummer des Beispiels die eingesetzten Mengen der Komponenten in Gewichtsprozent wiedergegeben.

## Tabelle 2

| Komponenten | Beispiele Nr. | | | | |
|---|---|---|---|---|---|
| | 1 | 2 | 3 | 4 | 5 |
| **Polyamid:** | | | | | |
| A | 80 | 58 | | | |
| B | | | 88 | | |
| C | | | | 78 | 67 |
| **Terpolymer:** | | | | | |
| D | 20 | 42 | | | |
| E | | | 12 | 22 | 33 ... |

In Abhängigkeit von den nach den Beispielen erhaltenen Produkten sind in Tabelle 3 die physikalischen Eigenschaften wiedergegeben, während der in der dann folgenden Tabelle 4 die Zugschälfestigkeiten in Anlehnung an DIN 53282 bei 20 °C und einer Zuggeschwindigkeit von 50 mm/sec aufgeführt sind.

Tabelle 3

Physikalische Eigenschaften der Polyamid-Blends

| Beispiele | Erweichungspunkt (°C) | Viskosität (mPa·s/200°C) | Mandrellbruchpunkt (°C) |
|---|---|---|---|
| 1 | 152 | 9 000 | - 40 |
| 2 | 135 | 22 300 | - 50 |
| 3 | 136 | 60 000 | - 25 |
| 4 | 135 | 12 600 | - 40 |
| 5 | 132 | 22 800 | - 45 |

Tabelle 4

Zugschälfestigkeit in N/25 mm an verschiedenen Werkstoffen

| Beispiele | Cu/PE | Al/PE | Al/PVC | Cu/Cu | Al/Al |
|---|---|---|---|---|---|
| 1 | 150 | 80 | 80 | 150 | 80 |
| 2 | 80 | 64 | 34 | 80 | 64 |
| 3 | 38 | - | 72 | 38 | 72 |
| 4 | 125 | 46 | 46 | 125 | 46 |
| 5 | 85 | 58 | 38 | 85 | 58 |

Die angewendeten Prüfverfahren sind nachstehend zusammengefaßt bzw. charakterisiert.

1. R + B (Erweichungspunkt)

Der Erweichungspunkt °C wurde nach der Ring + Ball-Methode (R + B) nach ASTM E - 28 gemessen.

2. Viskosität

Die Viskosität in mPa·s wurde unter Verwendung eines Brookfield Thermocel Viscosimeters Typ RVT mit der Spindel 27 bei 160 °C oder 200 °C gemessen.

3. Schälfestigkeit

Die Schälfestigkeit wurde als T-peel-Test durchgeführt an für die Kabelherstellung eingesetzten, extrudierfähigen Polymerisaten aus Polyethylen und PVC sowie einer weiteren Vorbehandlung unterzogenen Cu- bzw. Al-Folien einer Dicke von 200 bzw. 100 µm.

Prüfkörper: 120 - 25 x 0,2 mm Überlappung 50 mm

Verklebung: Zwischen die zu verklebenden Werkstofge wurde ein 1 mm starker Polyamid-Blend-Film positioniert und unter einer Presse bei 200 °C bei 7 bar während 45 Sekunden gefügt.

Konditionierung: 24 h bei 20 °C und ca. 60 % relativer Luftfeuchtigkeit

4. Prüfung

20 °C, 50 mm Abzugsgeschwindigkeit.

**Patentansprüche**

1. Schmelzklebstoff aus
   - Polyamiden auf Basis von dimerisierten Fettsäuren, aliphatischen Aminen und modifizierenden Zusätzen einerseits sowie
   - Copolymeren des Ethylens andererseits

   in verträglicher Mischung, dadurch gekennzeichnet, daß sie
   - 5 bis 95 Gew.-%, bezogen auf Gesamtmischung, eines Copolymeren aus
     Ethylen,
     dem inneren Anhydrid einer ethylenisch ungesättigten Dicarbonsäure und
   - gegebenenfalls (Meth-)acrylsäureestern und/oder Vinylestern oder bis zu 15% Propylen, bezogen auf Ethylen,

   sowie gewünschtenfalls
   bis zu 30 Gew.-% weiterer Hilfsstoffe enthalten.

2. Schmelzklebstoffe nach Anspruch 1, dadurch gekennzeichnet, daß sie Copolymere aus Ethylen und Maleinsäureanhydrid enthalten, vorzugsweise Copolymere aus
   50 bis 90 Gew.-% Ethylen,
   5 bis 30 Gew.-% (Meth-)acrylsäureester von aliphatischen linearen oder verzweigten primären $C_1$-$C_{18}$-Alkoholen,
   2 bis 30 Gew.-% des inneren Anhydrids einer polymerisierbaren Carbonsäure, jeweils bezogen auf das Copolymere und insbesondere
   8 bis 90 Gew.-% Ethylen,
   5 bis 15 Gew.-% (Meth-)acrylsäureester von aliphatischen primären linearen oder verzweigten $C_1$-$C_{18}$-Alkoholen und
   2 bis 5 Gew.-% Maleinsäureanhydrid.

3. Schmelzklebstoffe nach den Ansprüchen 1 und 2, dadurch gekennzeichnet, daß Polyamide der folgenden Zusammensetzung eingesetzt werden:
   a) 35 bis 49,5 Mol-% dimere Fettsäure sowie
   b) 0,5 bis 15 Mol-% monomere Fettsäure einer Kettenlänge von 12 bis 22 Kohlenstoffatomen und
   c) 2 bis 35 Mol-% Polyetherdiamine der allgemeinen Formel

   $$H_2N - R_1 - O - (RO)_x - R_2 - NH_2,$$

   in der x eine Zahl zwischen 8 und 80, vornehmlich zwischen 8 und 40, $R_1$ und $R_2$ gleiche oder verschiedene aliphatische und/oder cycloaliphatische Kohlenwasserstoffreste und R einen gegebenenfalls verzweigten aliphatischen Kohlenwasserstoffrest mit 1 bis 6 Kohlenstoffatomen darstellt sowie
   d) 15 bis 48 Mol-% aliphatische Diamine mit 2 bis 40 Kohlenstoffatomen im C-Gerüst,

   wobei die dimeren Fettsäuren bis zu 2/3 durch aliphatische Dicarbonsäuren mit 4 bis 12 Kohlenstoffatomen ersetzt werden können.

4. Schmelzklebstoffe nach den Ansprüchen 1 und 2, dadurch gekennzeichnet, daß sie ein Polyamid enthalten aus
   a) 20 bis 49,5 Mol-% dimeren Fettsäuren sowie
   b) 0,5 bis 15 Mol-% monomeren Fettsäuren einer Kettenlänge von 12 bis 22 Kohlenstoffatomen und bis zu
   c) 20 bis 55 Mol-% eines wenigstens 2 primäre Aminogruppen tragenden Amins mit 2 bis 40 Kohlenatomen im C-Gerüst,

   wobei die dimeren Fettsäuren bis zu 2/3 durch aliphatische Dicarbonsäuren mit 4 bis 12 Kohlenstoffatomen ersetzt sein können.

5. Schmelzkleber nach den Ansprüchen 1 bis 4, dadurch gekennzeichnet, daß das Polyamid Säureendgruppen aufweist und die Säurezahl 1 bis 50, vorzugsweise 2 bis 30, insbesondere 4 bis 12 beträgt.

6. Schmelzkleber nach den Ansprüchen 1 bis 5, dadurch gekennzeichnet, daß das Polyamid Aminoendgruppen trägt und die Aminzahl 2 bis 15, vorzugsweise 4 bis 10 beträgt.

**7.** Schmelzkleber nach den Ansprüchen 1 bis 6, dadurch gekennzeichnet, daß das Copolymere in Mengen von 5 bis 60 Gew.-%, insbesondere 10 bis 30 Gew.-% vornanden ist.

**8.** Schmelzkleber nach den Ansprüchen 1 bis 7, dadurch gekennzeichnet, daß als weitere Hilfsstoffe, insbesondere bei Polyamiden mit Aminoendgruppen Verträglichkeitsverbesserer eingesetzt werden.

**9.** Schmelzkleber nach den Ansprüchen 1 und 8, dadurch gekennzeichnet, daß als Verträglichkeitsverbesserer Anhydride von Carbonsäuren mit 3 bis 10 C-Atomen Fettsäureestern, Weichmachern und/oder organische Lösungsmittel eingesetzt werden.

**10.** Verfahren zur Herstellung von Schmelzklebern nach den Ansprüchen 1 bis 9, dadurch gekennzeichnet, daß man eine Mischung der festen Ausgangsstoffe über den Schmelzpunkt erwärmt und durch Rühren vermischt.

**11.** Verfahren zur Herstellung der Schmelzkleber nach den Ansprüchen 1 bis 9, dadurch gekennzeichnet, daß man Lösungen der Einzelkomponenten mischt und das Lösungsmittel zumindest überwiegend abdestillieren läßt.

**12.** Verwendung von Schmelzklebstoff nach den Ansprüchen 1 bis 9, zum Verkleben von Kunststoffen wie insbesondere unbehandeltem Polyethylen oder unbehandeltem Polypropylen oder Metallen wie insbesondere Kupfer oder Aluminium miteinander oder mit sich selbst.

**Claims**

**1.** A hotmelt adhesive of

- polyamides based on dimerized fatty acids, aliphatic amines and modifying additives on the one hand and
- copolymers of ethylene on the other hand

in the form of a compatible mixture, characterized in that they contain

- 5 to 95% by weight, based on the mixture as a whole, of a copolymer of
  ethylene,
  the internal anhydride of an ethylenically unsaturated dicarboxylic acid and
- optionally (meth)acrylates and/or vinyl esters or up to 15% propylene, based on ethylene,

and, if desired,
up to 30% by weight of other auxiliaries.

**2.** Hotmelt adhesives as claimed in claim 1, characterized in that they contain copolymers of ethylene and maleic anhydride, preferably copolymers of
50 to 90% by weight ethylene,
5 to 30% by weight (methacrylates of primary, aliphatic, linear or branched $C_{1-18}$ alcohols and
2 to 30% by weight of the internal anhydride of a polymerizable carboxylic acid, based in each case on the copolymer, and, more particularly,
8 to 90% by weight ethylene,
5 to 15% by weight (meth)acrylates of aliphatic primary linear or branched $c_{1-18}$ alcohols and
2 to 5% by weight maleic anhydride.

**3.** Hotmelt adhesives as claimed in claims 1 and 2, characterized in that polyamides of the following composition are used:
a) 35 to 49.5 mol-% dimeric fatty acid,
b) 0.5 to 15 mol-% monomeric fatty acid having a chain length of 12 to 22 carbon atoms,
c) 2 to 35 mol-% polyether diamines corresponding to the following general formula

$$H_2N - R_1 - O - (RO)_x - R_2 - NH_2,$$

in which x is a number of from 8 to 80, primarily from 8 to 40, $R_1$ and $R_2$ may be the same or different and represent aliphatic and/or cycloaliphatic hydrocarbon radicals and R is an optionally branched aliphatic $C_{1-6}$ hydrocarbon radical, and
d) 15 to 48 mol-% of aliphatic diamines containing from 2 to 40 carbon atoms in the carbon chain

up to two thirds of the dimeric fatty acids being replaceable by aliphatic dicarboxylic acids containing from 4 to 12 carbon atoms.

**4.** Hotmelt adhesives as claimed in claims 1 and 2, characterized in that they contain a polyamide of
a) 20 to 49.5 mol-% of dimeric fatty acids,
b) 0.5 to 15 mol-% of monomeric fatty acids having a chain length of from 12 to 22 carbon atoms and up to
c) 20 to 55 mol-% of an amine containing at least two primary amino groups and from 2 to 40 carbon atoms in the carbon chain,
up to two thirds of the dimeric fatty acids being replaceable by aliphatic dicarboxylic acids containing from 4 to 12 carbon atoms.

**5.** Hotmelt adhesives as claimed in claims 1 to 4, characterized in that the polyamide contains terminal acid groups and the acid value is from 1 to 50, preferably from 2 to 30 and more preferably from 4 to 12.

**6.** Hotmelt adhesives as claimed in claims 1 to 5, characterized in that the polyamide contains terminal amino groups and the amine value is from 2 to 15 and preferably from 4 to 10.

**7.** Hotmelt adhesives as claimed in claims 1 to 6, characterized in that the copolymer is present in quantities of from 5 to 60% by weight and preferably in quantities of from 10 to 30% by weight.

**8.** Hotmelt adhesives as claimed in claims 1 to 7, characterized in that compatibility promoters are used as further auxiliaries, particularly in the case of amino-terminated polyamides.

**9.** Hotmelt adhesives as claimed in claims 1 to 8, characterized in that anhydrides of carboxylic acids containing from 3 to 10 carbon atoms, fatty acid esters, plasticizers and/or organic solvents are used as compatibility promoters.

**10.** A process for producing the hotmelt adhesives claimed in claims 1 to 9, characterized in that a mixture of the solid starting materials is heated beyond the melting point and mixed by stirring.

**11.** A process for producing the hotmelt adhesives claimed in claims 1 to 9, characterized in that solutions of the individual components are mixed and the solvent is at least predominantly distilled off.

**12.** The use of the hotmelt adhesives claimed in claims 1 to 9 for bonding plastics such as, in particular, untreated polyethylene or untreated polypropylene or metals, such as in particular copper or aluminium, to one another or to themselves.

**Revendications**

**1.** Adhésifs à fusion constitués de:
- polyamides à base d'acides gras dimérisés, d'amines aliphatiques et d'additifs modificateurs, d'une part, et de
- copolymères d'éthylène, d'autre part

en mélange compatible, caractérisés en ce qu'ils renferment
- 5 à 95 % en poids, par rapport au mélange total, d'un copolymère d'éthylène, de l'anhydride interne d'un acide dicarboxylique éthylèniquement insaturé et
- le cas échéant, d'esters (méth-)acryliques et/ou d'esters vinyliques, ou jusqu'à 15 % de propylène par rapport à l'éthylène, ainsi que le cas échéant,

jusqu'à 30 % en poids d'autres adjuvants.

**2.** Adhésifs à fusion selon la revendication 1, caractérisés en ce qu'ils renferment des copolymères d'éthylène et d'anhydride maléique, de préférence des copolymères présentant la composition suivante:
50 à 90 % en poids d'éthylène,
5 à 30 % en poids de (méth-)acrylates d'alcools primaires, aliphatiques, linéaires ou ramifiés de $C_1$ à $C_{18}$,

2 à 30 % en poids de l'anhydride interne d'un acide carboxylique polymérisable, dans chaque cas par rapport au copolymère, et en particulier
8 à 90 % en poids d'éthylène,
5 à 15 % en poids de (méth-)acrylates d'alcools primaires, aliphatiques, linéaires ou ramifiés de $C_1$ à $C_{18}$ et
2 à 5 % en poids d'anhydride maléique.

**3.** Adhésifs à fusion selon les revendications 1 et 2, caractérisés en ce que des polyamides présentant la composition suivante sont mis en oeuvre:
a) 35 à 49,5 moles % d'acide gras dimère et
b) 0,5 à 15 moles % d'acide gras monomère avec une longueur de chaine comprise entre 12 et 22 atomes de carbone et
c) 2 à 35 moles % de polyétherdiamine de la formule générale

$$H_2N - R_1 - O - (RO)_x - R_2 - NH_2,$$

dans laquelle x représente un nombre compris entre 8 et 80, principalement entre 8 et 40, $R_1$ et $R_2$ correspondent à des radicaux hydrocarbonés aliphatiques et/ou cycloaliphatiques identiques ou différents et R est un radical hydrocarboné aliphatique éventuellement ramifié comportant 1 à 6 atomes de carbone, ainsi que
d) 15 à 48 moles % de diamines aliphatiques dont le squelette de C comporte 2 à 40 atomes de carbone,
les acides gras dimères pouvant être remplacés jusqu'à concurrence de 2/3 par des acides dicarboxyliques aliphatiques comportant 4 à 12 atomes de carbone.

**4.** Adhésifs à fusion selon les revendications 1 et 2, caractérisés en ce qu'ils renferment un polyamide constitué de
a) 20 à 49,5 moles % d'acides gras dimères, et
b) 0,5 à 15 moles % d'acides gras monomères dont la longueur de chaîne est comprise entre 12 et 22 atomes de carbone et jusqu'à
c) 20 à 55 moles % d'une amine portant au moins 2 groupements amino primaires, dont le squelette de C comporte 2 à 40 atomes de carbone,
les acides gras dimères pouvant être remplacés jusqu'à concurrence de 2/3 par des acides dicarboxyliques aliphatiques comportant 4 à 12 atomes de carbone.

**5.** Adhésifs à fusion selon les revendications 1 à 4, caractérisés en ce que le polyamide présente des groupements terminaux acides et en ce que l'indice d'acidité atteint 1 à 50, de préférence 2 à 30, en particulier 4 à 12.

**6.** Adhésifs à fusion selon les revendications 1 à 5, caractérisés en ce que le polyamide porte des groupements terminaux amino et en ce que l'indice d'amine atteint 2 à 15, de préférence 4 à 10.

**7.** Adhésifs à fusion selon les revendications 1 à 6, caractérisés en ce que le copolymère est présent en quantité de 5 à 60 % en poids, en particulier de 10 à 30 % en poids.

**8.** Adhésifs à fusion selon les revendications 1 à 7, caractérisés en ce que des améliorants de compatibilité sont mis en oeuvre comme autres adjuvants, en particulier dans le cas de polyamides à groupements terminaux amino.

**9.** Adhésifs à fusion selon les revendications 1 à 8, caractérisés en ce que des anhydrides carboxyliques comportant 3 à 10 atomes de C, des esters d'acides gras, des plastifiants et/ou des solvants organiques sont utilisés comme améliorants de compatibilité.

**10.** Procédé de préparation d'adhésifs à fusion selon les revendications 1 à 9, caractérisé en ce que l'on chauffe un mélange des matières de départ solides au-delà du point de fusion et en ce qu'on les mélange par agitation.

**11.** Procédé de préparation d'adhésifs à fusion selon les revendications 1 à 9, caractérisé en ce que l'on

mélange des solutions des composants individuels et en ce qu'on chasse le solvant par distillation, au moins en majeure partie.

**12.** Utilisation d'adhésif à fusion selon les revendications 1 à 9 pour le collage de matières plastiques, tels qu'en particulier le polyéthylène non traité ou le polypropylène non traité, ou de métaux, tels qu'en particulier le cuivre ou l'aluminium entre eux ou avec eux-mémes.